# EUROPEAN PATENT APPLICATION

(11) **EP 3 598 900 A1**
(43) Date of publication of application: **29.01.2020**
(21) Application number: 18425057.9
(22) Date of filing: 25.07.2018
(51) Int. Cl.: A21B 3/15

(54) **BAKING PAN FOR COOKING CROISSANTS AND THE LIKE IN A CONVECTION OVEN**

(71) Applicant: Bonferraro S.p.A., 37060 Bonferraro (VR) (IT)
(72) Inventor: Andreatta, Antonio, 33082 Azzano Decimo PN (IT); Bicego, Luca, 37060 Bonferraro di Sorgà VR (IT); Gastaldelli, Lucio, 46037 Roncoferraro MN (IT); Righetti, Marco, 46032 Castelbelforte MN (IT); Tosi, Mauro, 37051 Bovolone VR (IT)
(74) Representative: Concone, Emanuele

(57) **Abstract**

Baking pan including a plurality of inclined planes (1) that are parallel and connected by connectors (2) to form a structure whose section is sawtooth-shaped, said structure being provided with a plurality of openings (4) having a homogeneous distribution and a total area that is equal to at least 40% of the total area of the baking pan surface.

## Description

This invention concerns ovens used for cooking semi-finished food products, and in particular a baking pan for cooking croissants. In the following we will make specific reference to an electric convection oven and to frozen croissants, but it is clear that what has been said can be applied to other types of oven (e.g. gas ovens) and other types of semi-finished food such as brioches, bread rolls, cakes, etc. whether frozen or not.

It is known that currently croissants are cooked, starting from a frozen semi-finished product, in simple rectangular flat pans with a raised peripheral edge, so as to be substantially tray-shaped. Since the success of the baking process depends on how the croissant is globally and uniformly invested by the flows of hot air coming from the blowing and heating system of the oven, it is essential to expose the largest possible surface area of the croissant to said flows.

A drawback of these traditional pans is that they do not allow a good exposure of the croissants to the flows of hot air, even in the case of pans with perforated bottom, in particular the croissants arranged around the perimeter that also suffer from the presence of the raised peripheral edge. As a result, the cooking time and therefore the energy consumption of the oven are rather high, and the cooking is not perfectly uniform between the upper and lower part of the same croissant and between the croissants arranged centrally and those arranged peripherally.

The object of the present invention is therefore to provide a baking pan that is free from said drawbacks. This object is achieved with a baking pan consisting of a grid with an open surface percentage of more than 40% and a section along a symmetrical plane that is sawtooth-shaped.

A first important advantage of this baking pan is that it considerably increases the lower surface area of the croissant exposed to the air flow, so that the cooking process is quicker and more uniform, saving time and energy.

A second notable advantage of this pan resides in the increase in its load capacity from 20 to 30% with the same floor area, i.e. the same space in the oven, so that in a cooking cycle with the oven at full load (i.e. with the maximum number of pans possible) it is possible to cook a greater number of croissants compared to the same load with traditional pans.

A further significant advantage of this pan stems from the absence of a raised peripheral edge, which results in a uniform cooking of the croissants regardless of whether they are placed centrally or peripherically.

Further advantages and characteristics of the baking pan according to the present invention will be evident to those skilled in the art from the following detailed description of an embodiment thereof with reference to the annexed drawings, in which:

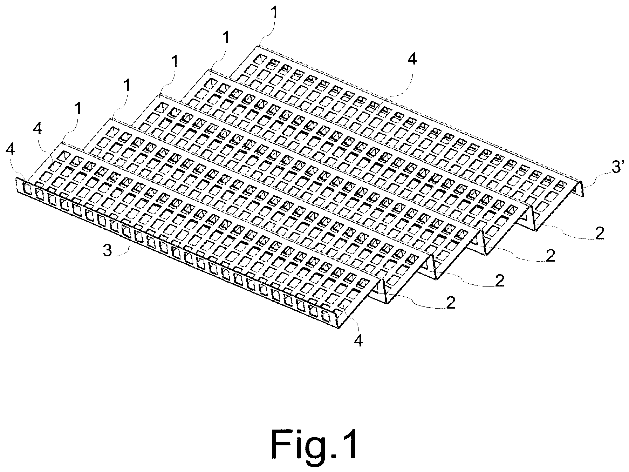

Fig.1 is a perspective view of the above-mentioned baking pan;

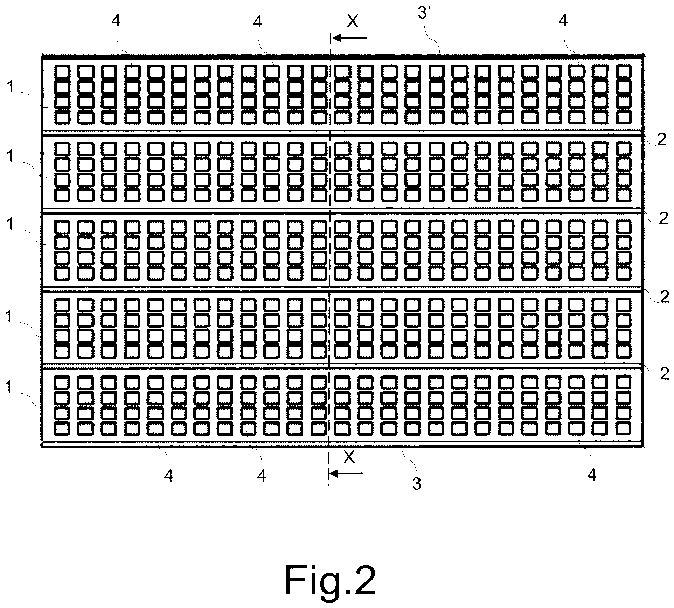

Fig.2 is a plan view of the baking pan of Fig.1;
Fig.3 is a section view of the pan along the plane of symmetry X-X of Fig.2; and
Fig.4 is a perspective view partially removed of a muffle of an oven including four pans according to the present invention.

The attached figures show an example embodiment of a baking pan according to the present invention that consists of five inclined planes or ramps 1 which are parallel and connected by four vertical planes or connectors 2. The structure of the baking pan ends, on the sides parallel to connectors 2, with a front edge 3 that extends upwards and with a back edge 3' that extends downwards, said edges 3, 3' having preferably a height equal to about half the height of connectors 2.

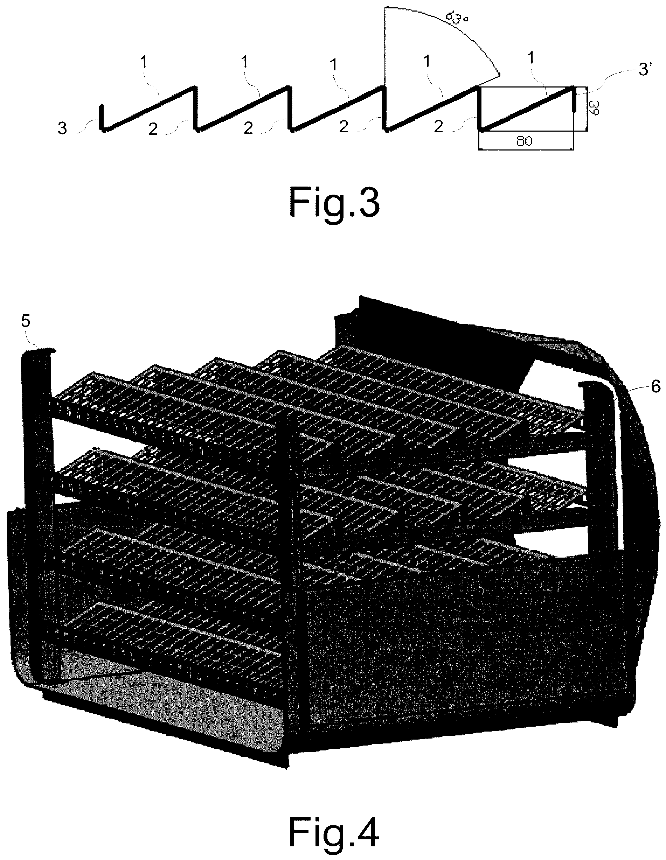

In the example shown, connectors 2 have a pitch of 80 mm and a height of 39 mm which result in an angle of 63° of the inclined planes 1 with respect to them, so as to obtain a section with a typical sawtooth profile (Fig.3). However, it is clear that these values can be modified according to specific construction requirements, and the value of the above angle can be indicatively comprised between 50° and 75°.

The entire surface of the baking pan is provided with rectangular openings 4 arranged in rows parallel to the sides of the baking pan so as to obtain a grid structure. More specifically, each ramp 1 includes four rows of openings 4 while connectors 2 and edges 3, 3' include only one row of openings 4. Obviously, also the number, the shape, the arrangement and the dimensions of openings 4 can be modified according to specific construction requirements, provided that their distribution is homogeneous and the total area of openings 4 is equal to at least 40%, preferably from 50% to 60%, of the total area of the surface of the baking pan.

It is therefore clear that the above-described and illustrated embodiment of the baking pan according to the invention is just an example susceptible to numerous variations, in addition to those already mentioned above. For example, the direction of insertion of the pans into the support structure of an oven formed by four angular uprights 5 that carry side guides 6 can be either perpendicular to edges 3, 3' (as shown in Fig.4) or parallel to them, i.e. said edges could be arranged along the side guides 6 by rotating the pan 90° in the horizontal plane.

Similarly, it is clear that the front 3 and rear 3' edges are defined as such with respect to the position of the baking pan in the oven but obviously it is possible to insert the baking pan rotated 180° in the horizontal plane so as to invert the position of said edges.

Moreover, due to the absence of a peripheral edge, the pan is symmetrical with respect to a rotation of 180° around a horizontal axis therefore it is not possible to define an upper face and a lower face since both faces have the same shape. This is advantageous because if one face is damaged or too dirty, it is possible to continue using the pan on the other face before replacing or cleaning it.

However, the presence of the rear edge 3' is not strictly necessary because if the pan is always used on the same face the edge is not necessary to keep the croissants arranged on the end inclined plane 1 as does the front edge 3.

## Claims

1. Baking pan **characterized in that** it includes a plurality of inclined planes (1) that are parallel and connected by connectors (2) so as to form a structure whose section along a plane of symmetry is sawtooth-shaped, said structure being provided with a raised edge (3) along at least one of the sides parallel to said connectors (2), and **in that** it is provided with a plurality of openings (4) having a homogeneous distribution and a total area that is equal to at least 40% of the total area of the baking pan surface.

2. Baking pan according to claim 1, **characterized in that** the total area of the openings (4) is comprised between 50% and 60% of the total area of the baking pan surface.

3. Baking pan according to claim 1 or 2, **characterized in that** the angle between the inclined planes (1) and the connectors (2) is comprised between 50° and 75°, preferably about 63°.

4. Baking pan according to any of the preceding claims, **characterized in that** it further includes a second raised edge (3') equal to the first raised edge (3) and arranged on the side opposite thereto so as to obtain a symmetrical structure with respect to a rotation of 180° around a horizontal axis.

5. Baking pan according to any of the preceding claims, **characterized in that** the height of the raised edge (3) or of both raised edges (3, 3') is equal to about half the height of the connectors (2).
